# EUROPEAN PATENT SPECIFICATION

(11) **EP 0 770 046 B1**
(45) Date of publication and mention of the grant of the patent: **16.09.1998**
(21) Application number: 95926170.2
(22) Date of filing: 05.07.1995
(51) Int. Cl.: C05G 3/00

(54) **CONTROLLED RELEASE FERTILIZERS**
DÜNGEMITTEL MIT GESTEUERTER FREIGABE
ENGRAIS A LIBERATION LENTE

(30) Priority: 07.07.1994 IL 11024194; 28.10.1994 US 331324
(43) Date of publication of application: 02.05.1997
(73) Proprietor: YANIRSH TECHNOLOGIES, INC., 32235 Haifa (IL)
(72) Inventor: YANIV, Itzhak, Ramat Almogi, 34792 Haifa (IL)
(74) Representative: Vossius, Volker, Dr.
(86) International application number: US9508387
(87) International publication number: WO9601794

(56) References cited:
- US-A- 5 264 017
- DATABASE WPI Section Ch, Week 8109 Derwent Publications Ltd., London, GB; Class C04, AN 81-13831D & DD,A,145 015 ( ELBE W) , 20 November 1980
- DATABASE WPI Section Ch, Week 8403 Derwent Publications Ltd., London, GB; Class A93, AN 84-014881 & JP,A,58 208 159 ( SEKISUI CHEMI IND KK) , 3 December 1983
- DATABASE WPI Section Ch, Week 8849 Derwent Publications Ltd., London, GB; Class E19, AN 88-353440 & US,A,4 786 328 (WEILL E ET AL) , 22 November 1988

## Description

### Field of the invention

The present invention relates to controlled release water-soluble fertilizers and to methods for their production.

### Background of the Invention

The most common solid fertilizers are water-soluble compounds (organic and inorganic compounds, such as urea, potassium sulfate, potassium nitrate, ammonium nitrate, ammonium sulfate, ammonium phosphate, etc.). However, the high solubility of such compounds reduces their efficiency, as they are drained by rain or irrigation water too quickly for the plants to utilize them efficiently. Moreover, the fertilizers lost to the surroundings cause environmental problems (e.g. nitrates poison the drinking water system, phosphates cause eutrophication of rivers and lakes, etc.).

Two general methods were suggested in the art to overcome the above disadvantages, namely:
a. To use substitutes for the said common fertilizers, which are slow-release fertilizers (SRF), such as urea-formaldehyde, oxamide, melamine, etc., which however are much more expensive than the usual fertilizers;
   and
b. To use physically modified SRF, which are prepared by mixing and/or coating and/or encapsulating/microencapsulating the water soluble fertilizers with waxes, sulphur, synthetic polymers, cements (e.g. Portland cement), organic acids, etc. These modifications lead to products of better cost-performances than (a), but which are still not good enough to replace the regular fertilizers in common uses.

The literature deals quite extensively with both the abovementioned approaches. A general review of slow-release fertilizers SRF (CEH Marketing Research Report - " Controlled Release Fertilizers" ; by S. P. Landels with A. Leder and N. Takei; 1990 by the Chemical Economics Handbook - SRI International) presents a comprehensive view of the two general methods that were mentioned above. This review supports the view that no technology for the production of SRF is available in the examined art, which could lead to replacement of most of the water-soluble fertilizers in use. Moreover, it is clear from the economical discussion that only very simple production methods and very inexpensive reagents may be used to convert the fertilizers into successful and widespread SRF.

EP-A-0276179 discloses a method of coating water-soluble fertilizers with water-insoluble metal salts of organic acids containing 6 to 30 carbon atoms. A close examination of this technology shows that it is not useful for practical purposes, as the constituents of the coating, including the paraffin, are too expensive and the whole coating process is too cumbersome and costly.

DD 141519 deals with a technology for preparing SRF sticks for gardening, which are based on a skeleton of sand and calcium aluminate cement. Such products may be used for small scale application in which the cost-effectiveness is not of prime importance, but are not suitable for large scale agricultural and industrial use.

US-A-4,023,955 discloses a method for encapsulating water-soluble fertilizes with hydrated cement. Superficially, this technology looks very promising. However, a close scrutiny reveals the complexity of the operation that is necessary to obtain a useful SRF. Moreover, it requires the use of elastomers which are not necessarily environmentally friendly or inexpensive. Also, this technology was not in fact implemented to any appreciable extent.

US-A-5,030,267 describes a technology useful to coat water-soluble fertilizers with specially prepared calcium metasilicate cement, and to turn it into SRF. Indeed, the product is obtained, but the expenses involved in preparing this special cement and the further costs that are associated with the rest of the coating procedure make it impossible to obtain low cost SRF.

DD 145,015 discloses a method for preventing urea from caking on storage by coating it with magnesite cements (oxychloride and oxysulfate). This patent is specific to urea, and does not teach or in any way discloses that this surface-modified urea is also a SRF. Indeed, its product is not a SRF, because the magnesite cements deteriorate quite fast in water and the urea dissolves too rapidly in water. Therefore, this coated urea can not be considered a proper SRF, as will be shown in the examples to follow.

WO 95/32930 describes a method to improve magnesite cements (magnesium oxychloride and/or oxysulfate). This method comprises mixing the following materials: MgO; MgCl₂ and/or MgSO₄; water; organic carboxylic acid(s) and/or their salts and/or their acid anhydrides. The resulting cements have been found to be of much improved physical properties and most of all - their stability in water changed dramatically. An extensive comparison of the properties of the improved magnesite cements to those of the regular cements is given in the above patent applications.

The outstanding stability of the improved magnesite cements in water makes them extremely suitable for the preparation of SRF, while the regular magnesite cements do not offer such properties and, therefore, are not suitable for that purpose. The examples provided hereinafter will clearly show the marked differences between the SRF made with the improved magnesite cements and those attempted with the regular cements.

It is an object of the present invention to provide controlled-release fertilizers which can be used effectively for large agronomical crops at relatively low cost.

It is another object of this invention to provide a process for converting water-soluble fertilizers into low cost controlled-release fertilizers.

It is still another object of this invention to provide controlled-release fertilizers including suitable fillers - especially the soil in which the controlled-release fertilizers is intended to be used.

It is a further object of this invention to provide improved controlled-release fertilizers comprising flotation reagents that are specific to brine solutions and the particular water-soluble fertilizer.

It is another object of this invention to provide controlled-release fertilizers made of a blend of two or more water-soluble fertilizers. in the presence of MgCl₂ or MgSO₄ solutions.

It is an object of this invention to provide improved magnesite cement coatings useful as sequestering agents for heavy metal ions that are deliberately added to the fertilizers to broaden their nutrient value.

It is yet another object of this invention to provide controlled-release fertilizers which are essentially environmentally friendly.

All the above and other characteristics and advantages of the invention will be better understood through the following illustrative and non-limitative description of preferred embodiments.

Thus, the present invention relates to controlled-release fertilizers comprising a mixture of (a) one or more water-soluble fertilizer(s) and b) a magnesite cement cured from a composition comprising magnesium oxychloride or magnesium oxysulfate, or mixtures thereof, and one or more organic carboxylic acid(s), or carboxylate salts thereof, or acid anhydrides thereof, or mixtures thereof.

### Detailed Description of The Invention

Improved magnesite cements are disclosed in WO 95/32930. Basically, these are magnesite cements (magnesium oxychloride and/or oxysulfates) which are produced by mixing MgO, MgCl₂ and/or MgSO₄, and water in the presence of organic carboxylic and polycarboxylic acids (including their salts and acid anhydride forms).

The said organic carboxylic acid(s) can be described by the general formula:

R-(COOH)n

wherein:
n = 1 or higher;
R= COOH; H: alkyl (linear or branched; saturated or unsaturated; cyclic or acyclic); aryl (substituted or unsubstituted); and wherein one or more of said alkyl or aryl carbon or hydrogen atoms may be replaced by oxygen, nitrogen, phosphor or sulfur atoms.

Of course, each acid may be substituted by the corresponding acid anhydride or by its carboxylate salts. Illustrative but non-limitative salts are the Na⁺, Mg⁺⁺ and Ca⁺⁺ salts.

Carboxylic acid halides of the formula R(COX)ₙ: where X = Halogen, which undergo fast hydrolysis under the production conditions of the magnesite cements, may give similar results, but these compounds are usually more expensive than the corresponding acids, acid anhydrides and salts.

Polycarboxylic acids (salts and anhydrides) can be used to produce the improved magnesite cements for the controlled-release fertilizers, but such polymers can also be produced, *in situ*, when using suitable monomers like acrylic acid. To enhance the polymerization suitable polymerization-initiators like sodium perborate can be added.

Naturally, these cements may contain a variety of additives (e.g. greases like paraffins and esters of long chain fatty acids and alcohols; polymers like polyolefins, polyethyleneglycols, silicon rubbers) and fillers (e.g. soil, coal, active carbon, fly-ashes, etc.), which are quite common in the art of cement production. The sequence in which the additives and fillers are applied should be optimized case by case. For instance, one of the preferred modes of operation is achieved by dissolving first the additive(s) in the suitable carboxylic acid(s) and then by applying the resulting material(s) in the production of the improved magnesite cement coatings over the fertilizer(s). Carboxylic acids that are capable of foaming the magnesite cements are, in many cases, the preferred ones to use. However, the invention is not at all limited to these compounds, as is shown in the examples to follow, and many variations can be devised by persons skilled in the art.

According to a preferred embodiment the Acidic Fly-Ash contains about 35%-55% by weight of SiO₂, about 15%-32% of Al₂O₃ no more than 15% by weight of CaO, and has an Loss On Ignition (LOI) (1000°C) greater than 2.5 wt%.

The fillers further improve the performance of the cements, their setting time, reduce the cost of the formulations and assist in getting the most suitable combination for the various soils. This may further improve the cost/performance of the controlled-release fertilizer and reduce the foreign elements that are being added to the specific environments.

In many cases heavy metal ions are added to the fertilizers to improve the nutrient quality of the products. These ions may be drained to the water system and contaminate it. Usually the heavy metal ions (micro-nutrients) are sequestered to expensive compounds to alleviate this phenomenon. Due to the fact that the improved magnesite cements are excellent complexants for such metal ions, it is possible to blend the simple heavy metal salts into the water-soluble fertilizer and to protect the whole formulation with these cements.

In some cases the performance of the controlled-release fertilizer should be further improved to meet some specific standards. This can be done, among other methods, by precoating the water-soluble fertilizer with small amounts of flotation agents that adhere to the surface of the fertilizer(s) and turn them hydrophobic. Alternatively, the water-soluble fertilizer can be precoated by using a dilute solution of the flotation agents in brine. The suitable flotation agents may be selected by simple test tube flotation experiments, which are well known those skilled in the art ( "Tests For Flotability" - E.J. Pryor: Mineral Processing; Elsevier Publishing Co. Ltd: Third Ed.; pp 463-468 (1965)). Thereafter, the precoated water-soluble fertilizer may be treated regularly to form the improved magnesite cement coatings.

WO 95/32930 also describes shapable compositions comprising a cement of the type described above. Such shapable compositions are useful in manufacturing formed bodies. Illustrative formed bodies comprising a cement which has hardened include cast articles, structural elements. pressed articles, injected articles, extruded articles, and articles in pelletized form or in granulated form (ie compacted, crushed and sieved to the right size distribution).

The methods used to apply the improved magnesite cements are similar to those known in the art of producing fertilizers. Mixing of the water-soluble fertilizers with the improved cements, using high shear mixers, gives rise to a high viscosity mass that can be extruded, casted, pressed or pelletized to any desired shape or size. After a short curing at ambient temperature the product can be further crushed and sieved to obtain other desired physical forms of the controlled-release fertilizer. Moreover, it is possible to prepare the controlled-release fertilizer by spraying the surface of the water-soluble fertilizer with suitable carboxylic acid(s) and brine. The wet surface can then be dusted with MgO powder to form the improved cements *in situ*. Repetition of this operation may allow a better control over the dissolution of the fertilizers, though it is not mandatory in most cases. The use of flotation agents to inprove the products can be exploited as well.

In one embodiment of the invention, the improved magnesite cements are prepared separately and then applied to the fertilizer by mixing or coating or encapsulating or microencapsulating operations, to form the final product. In a still preferred embodiment of the invention, the improved magnesite cements are applied on top of precoated fertilizers.

According to another preferred embodiment of the invention, the improved magnesite cements are prepared *in situ* on the surface of the water soluble fertilizer or on precoated fertilizer.

The use of mixtures of fertilizers, e.g. NPK fertilizers, is well known in the art. The present invention permits to formulate single- and multi-component controlled-release fertilizers in manners that are known in the art, including the *In-Situ* mode of operation that results from the fact that the magnesite cements are produced from, basically, two elements which interact to form the final coating. The curing time is very short at ambient temperature, which gives rise to exceedingly high production rates and therefore to low production costs. Moreover, it was found that mixing e.g. urea and KNO₃ and/or K₂SO₄ and/or KCI in the presence of brine solutions of MgSO₄ and/or MgCl₂ gives rise to new combinations the nature of which is not yet known.

The invention is further illustrated in the following experimental part.

The raw materials used are as follows:
- calcined MgO, a product of Dead Sea Periclase ("MgP");
- calcined MgO, a product of Gregician Magnesite;
- grade "Normal F" - "MgF";
- grade "Normal K" - "Mgk";
- MgSO₄ solution having a density of d=1.2 g/cm³ were the ratio H₂O/MgSO₄ - 3.1.
- MgCl₂ solution having a density of d=1.267-1.27 g/cm³ were the ratio H₂O/MgCl₂=2.61.
- Acidic Fly-Ash (AFA) from Hadera power station (contains the major constituents: 50 % wt SiO₂, 25% wt Al₂O₃, 9 % wt CaO).

The purity of the various raw materials to be used is not of prime importance. Regular commercial materials are well suited for most applications regarding the production and use of the controlled-release fertilizers.

| | **Types of fertilizers** |
|---|---|
| Urea | -U |
| KNO₃ | -KN |
| K₂SO₄ | -KS |
| Mono ammonium phosphate | -MAP |
| Di ammonium phosphate | -DAP |
| KCl | -KCl |
| NH₄NO₃ | -NN |
| (NH₄)₂SO₄ | -NS |
| MAP+K₂SO₄+Urea | -N.P.K.-1 |
| MAP+K₂SO₄ | -N.P.K.-2 |
| K₂SO₄+Urea | -K.N.-1 |
| KCl+Urea | -K.N.-2 |
| K₂SO₄+NH₄NO₃ | -K.N.-3 |

### Abbreviations

"C.M" - carboxylic material, acid, salts or anhydride
"W.L." - weight loss
"F.L." - fertilizer loss by weight
"C" - collector
C1 - cocoamine (Armeen^{T} C)
C2 - Tallowamine (Armee^{T} T)
C3 - Dicocoamine (Armeen^{T} 2C)
C4 - N-coco-1,3-diaminopropane (Diomeen^{T}-C)
C5 - N-Tallow-1,3-diaminopropane (Dolomeen^{T}-T)
C6 - Tallowbis(2-Hydroxyethyl)amin - (Ethomeen^{T}-TH2)
C7 - polyoxylethylene(5) Tallowamine (Ethomeen^{T}-TH5)
C8 - Tallowamine acetate (Aramac^{T}-T)

In the examples below, the following raw materials were specifically used:

| | **Carboxylic Compounds** |
|---|---|
| P1 - | ethylene-acrylic acid copolymer |
| P3 - | nitrilotriacetic acid (N.T.A.H₃) |
| P4 - | ethylenediaminetetracarboxylic acid (EDTA Hu) |
| P6 - | DL-malic acid |
| P10 - | acrylic acid |
| P19 - | gluconic acid |
| P20 - | propionic acid |
| P21 - | acetic acid |
| P22 - | formic acid |
| P23 - | Emery^{T} 790 (a commercial mixture of fatty acids) |
| P20-CA - | calcium propionate |
| P21-CA - | calcium acetate |

| Cements | | | | |
|---|---|---|---|---|
| Cement Type | % Weight | | | |
| | MgO | MgCl₂ Brine | MgSO₄ Brine | Filler |
| Type A | 24 | | 36 | 40 |
| Type B | 24 | 36 | | 40 |
| Type C | 40 | - | 60 | - |

### Fillers

"Q" - quartz sand - 200 mesh
"Clay" - alumino silicate clay
"A.F.A." - Acidic Fly Ash
"G" - graphite or fine coal

### C.M.

In all tests C.M. concentration was 60 weight %, based on MgO.

### General Procedure

The raw materials in the desired amounts were introduced in a Lab. Retch Mill type KM-1 and subjected to a grinding/mixing operation for a period of up to 3 minutes. A viscous mass was thus produced, which was introduced into a pelletizing pan in order to form spherical pellets, and were 1-10% by weight of fine MgO powder were added in order to avoid agglomeration between the pellets.

The pellets were cured at room temperature for seven days and lateron were evaluated according to the procedure described hereinafter.

### Test Procedure: Seven-day dissolution

Particles (pellets) of the size of -3+0.5 mm were immersed in water at ambient temperature (i.e., 20-30°C) for seven days. The weight ratio of fertilizer/water was 5:1. The materials were dried overnight at 70°C before and after dissolution and weight loss of fertilizer was measured.

### Example 1 - comparative

Various controlled-release fertilizers based on regular magnesite cements "A" and "B", including different fillers, were prepared and tested according to procedure 1. The results are given in Table I below.

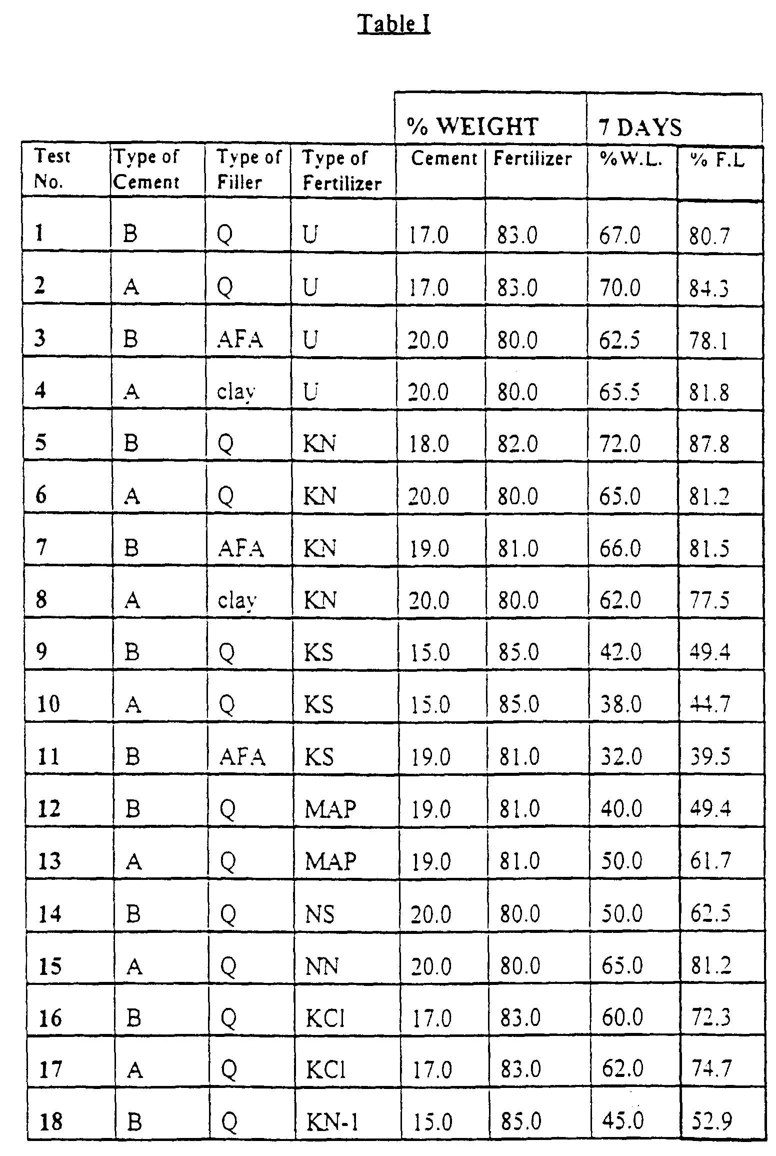

The results show that by using regular magnesite cement one can improve somewhat the release pattern of the fertilizers. However, the rate of dissolution is relatively high with respect to other "S.R.F." such as S.C.U. which may lose up to 30% of the fertilizer during the same period (seven days).

### Example 2

**Surface modification of fertilizer mixed with regular cement (encapsulation)** Flotability tests of various fertilizers immersed in MgCl₂ and MeSO₄ brine were conducted. The tests were conducted according to the principles of the flotability test x as described in the aforementioned book by E.J. Pryor. The following collectors were found to be excellent surface modifiers.

**Table II**

| **Type of Brine** | **Type of Fertilizer** | **Collector** | **Collector modifier** |
|---|---|---|---|
| MgCl₂ | U | C2 | |
| MgCl₂ | U | C4 | Al₂(SO₄)₃ |
| MgCl₂ | U | C5 | Al₂(SO₄)₃ |
| MgCl₂ | KN | C8 | |
| MgCl₂ | KN | C1 | |
| MgCl₂ | KN | C3 | |
| MgCl₂ | KS | C1 | |
| MgCl₂ | KS | C7 | |
| MgCl₂ | MAP | C6 | |
| MgSO₄ | U | C4 | Al₂(SO₄)₃ |
| MgSO₄ | KN | C1 | |
| MgSO₄ | KS | C1 | |

Accordingly, various slow-release fertilizers were prepared as follows:
- mixing the proper brine with the proper collector in a conditioning tank. The dosage of the collector in the brine is at the range of few hundreds to few thousands ppm. as is customary in flotation processes. The collectors dosages in the experiments ( Tables III and V ) were kept at the value of 2000 ppm.
- Preparing the slow-release fertilizer by introducing to the high shear mixer the modified brine, MgO, fertilizer and the cement filler.

After preparation, the products were tested according to the test procedure, as given in Table III below.

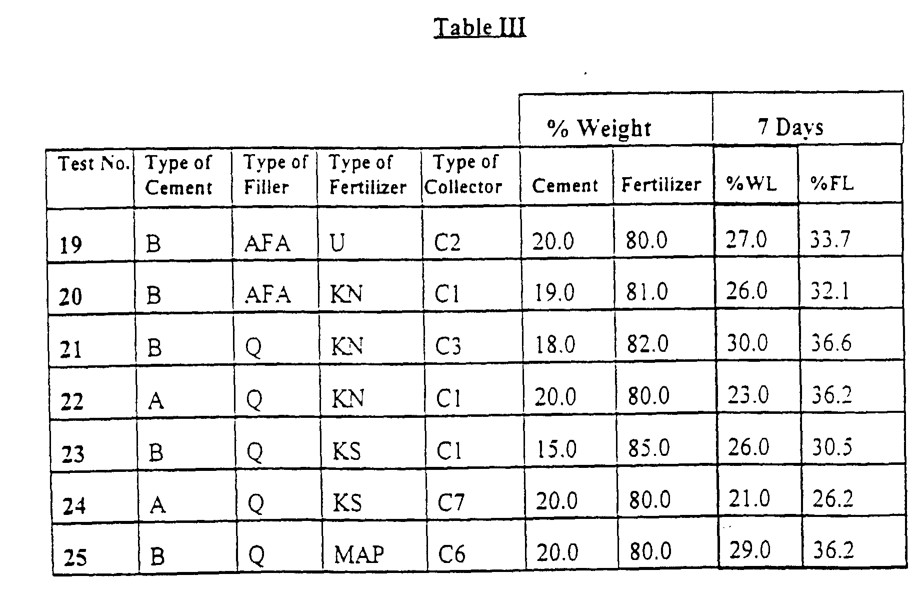

### Example 3

### Using improved magnesite cement for the manufacture of slow-release fertilizers (encapsulation)

The improved magnesite cement is as defined above, and with reference to WO 95/32930.

Various slow-release fertilizers were prepared by mixing the improved cement with various fertilizers and with different fillers. The materials were prepared and tested according to the test procedure, as given in Table IV below.

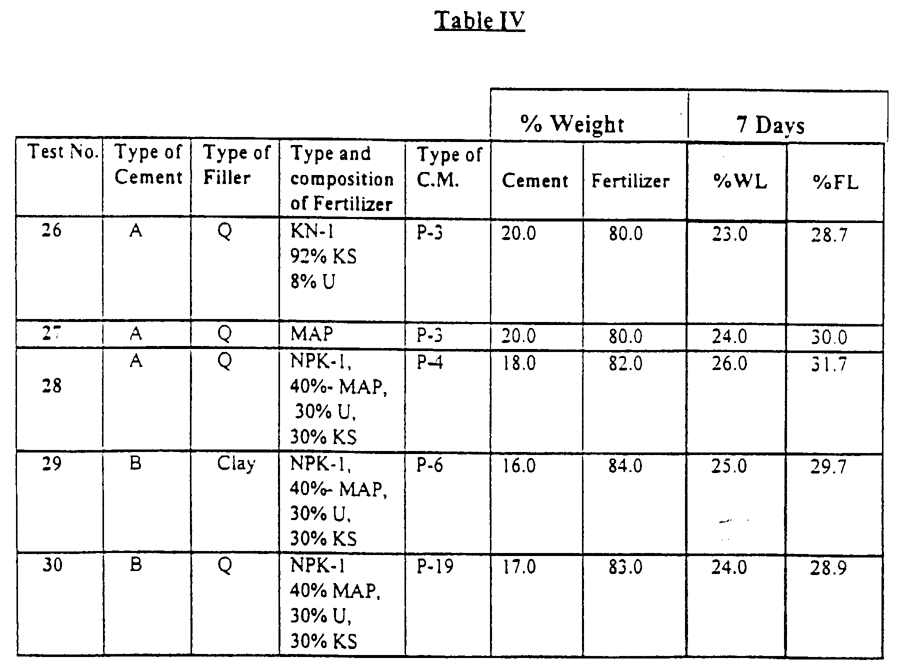

### Example 4

### Using fertilizer surface structure modification for encapsulation and improved magnesite cement for coating in order to manufacture slow-release fertilizers

The slow-release fertilizers were prepared by manufacturing pellets composed of regular cement and surface modified fertilizer as described in Example 2. During pelletization process coating takes place by spraying a solution which is a mixture of the brine and the "CM", as well as spreading simultaneously powder of MgO and the proper filler, so the improved cement is formed *in situ* at the pellet surface. Additional weight of the pellets due to the coating is varied between 5 to 15% (W).

The samples were prepared and tested according to the test procedure, as given in Table V below.

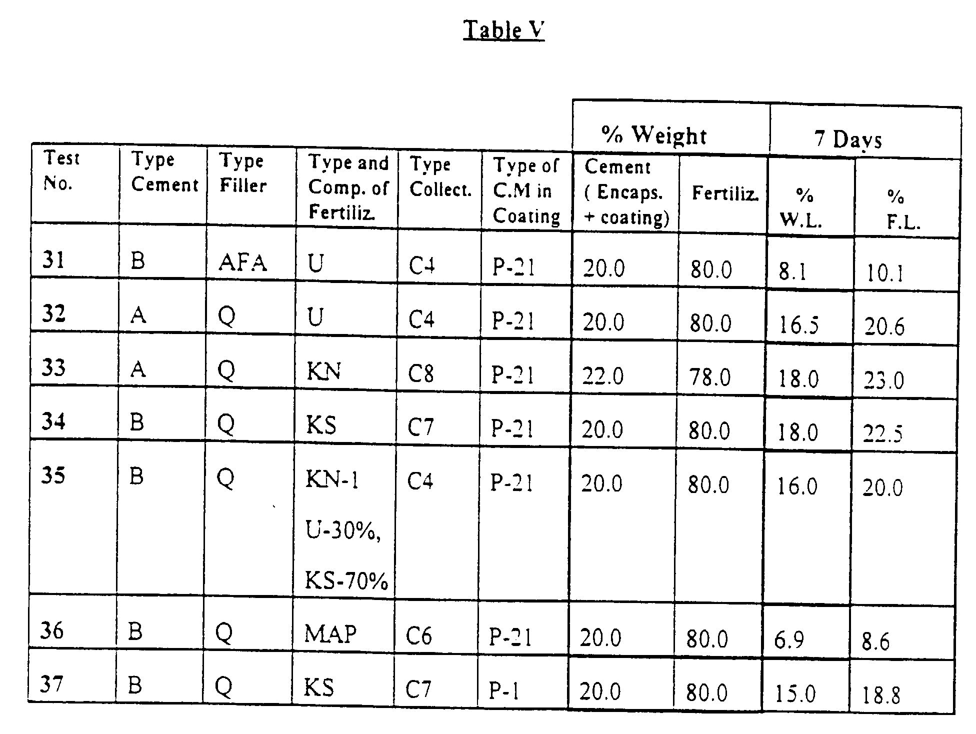

### Example 5

### Encapsulated and coated materials using only improved cements

Slow-release fertilizers were prepared by using improved cements. The improved cements served as an additive via the mixing stage (i.e., encapsulation) and at the pelletization stage (i.e. coating) by spraying a brine and the proper additive as well as MgO powder so a coating film is created *in situ.*

The samples were prepared and tested according to the test procedure as shown in Table VI below:

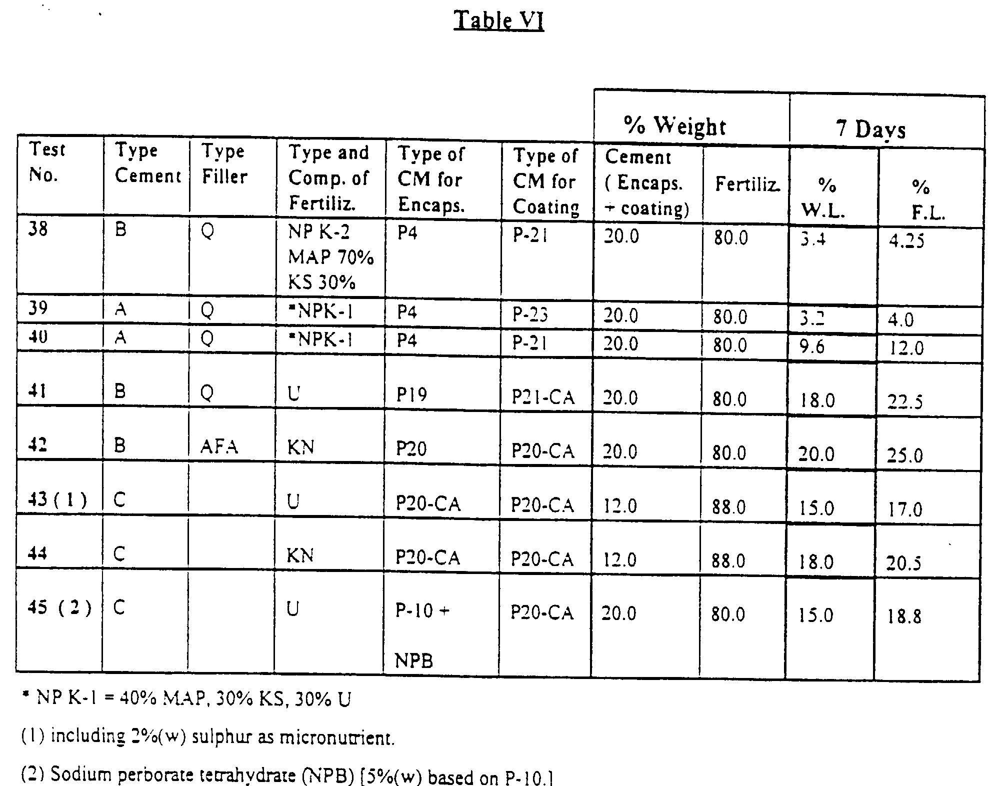

## Claims

1. Controlled-release fertilizers comprising a mixture of:
(a) one or more water-soluble fertilizer(s); and
(b) a magnesite cement cured from a composition comprising magnesium oxychloride or magnesium oxysulphate, or mixtures thereof, and one or more organic carboxylic acid(s), or carboxylate salts thereof, or acid anhydrides thereof, or mixtures thereof.

2. Controlled-release fertilizers according to claim 1, wherein said carboxylic acid(s) have the formula:
R-(COOH)ₙ
wherein:
n = 1 or higher;
R= -COOH; H; alkyl (linear or branched; saturated or unsaturated; cyclic or acyclic); aryl (substituted or unsubstituted); and wherein one or more of said alkyl or aryl carbon or hydrogen atoms optionally may be replaced by oxygen, nitrogen, phosphor or sulfur atoms.

3. Controlled-release fertilizers according to claim 1 or 2, wherein said carboxylic acids comprise polymeric polycarboxylic acids.

4. Controlled-release fertilizers according to claim 1, wherein said magnesite cement is cured from a composition comprising one or more organic carboxylic acids.

5. Controlled-release fertilizers according to claim 1, wherein said cement is cured from a composition comprising one or more organic carboxylic acid anhydrides or organic carboxylic acid salts.

6. Controlled-release fertilizers according to claim 3, wherein said polymeric polycarboxylic acids are polymerized in situ from one or more polymerizable organic carboxylic acids or acid anhydrides thereof, or carboxylate salts thereof with a polymerization initiator.

7. Controlled-release fertilizers according to claim 1, wherein said water-soluble fertilizers are selected from the group consisting of urea, ammonium nitrate, potassium nitrate, ammonium sulfate, potassium sulfate, potassium chloride, mono ammonium phosphate (MAP) and diammonium phosphate (DAP).

8. Controlled-release fertilizers according to claim 7, in which the mixtures of the water-soluble fertilizer that interacted in brine solutions are selected from among: urea and potassium sulfate; urea and potassium chloride; urea and potassium nitrate.

9. Controlled-release fertilizers according to claim 1, wherein said magnesite cement is prepared from brine solutions of MgCl₂, or MgSO₄ or mixtures thereof.

10. A method of manufacturing a controlled-release fertilizer as claimed in claim 1, wherein water-soluble fertilizer crystals are encapsulated or microencapsulated with said magnesite cement.

11. A method according to claim 10, wherein the encapsulated/microencapstulated water-soluble fertilizer are further agglomerated.

12. A method according to claim 11, wherein the agglomerates are further coated with the improved magnesite cements.

13. A method of manufacturing controlled-release fertilizers as claimed in claim 1, wherein said water-soluble fertilizer(s) are mixed with said magnesite cement to form a mixture of said fertilizer and said cement.

14. A method according to claim 13, wherein the mixture is casted.

15. A method according to claim 13, wherein the mixture is pressed.

16. A method according to claim 13, wherein the mixture is extruded.

17. A method according to claim 13, wherein the mixture is pelletized.

18. A method according to claim 13, wherein said controlled-release fertilizer is further crushed and sieved to the desired size distribution.

19. A method according to claim 10, wherein said fertilizer is coated by one or more layer(s) of said magnesite cement.

20. A method according to claim 10, wherein said cement is cured separately and then applied by mixing or coating or encapsulating or microencapsulating said fertilizer.

21. A method according to claim 20, wherein said magnesite cement is applied on top of precoated fertilizers.

22. A method according to claim 10, wherein said controlled-release fertilizer is prepared by curing said magnesite cement *in situ* on the surface of said water soluble fertilizers or on precoated ones.

## Patentansprüche

1. Düngemittel mit gesteuerter Freigabe, umfassend ein Gemisch aus:
(a) einem oder mehreren wasserlöslichen Düngemitteln, und
(b) einem Magnesit-Zement, ausgehärtet aus einer Zusammensetzung, umfassend Magnesiumoxychlorid oder Magnesiumoxysulfat oder Gemische davon, und eine oder mehrere organische Carbonsäuren, oder Carbonsäuresalze davon oder Säureanhydride davon oder Gemische davon.

2. Düngemittel mit gesteuerter Freigabe gemäß Anspruch 1, wobei die Carbonsäure(n) die allgemeine Formel:
R-(COOH)ₙ
aufweisen, wobei:
n = 1 oder größer,
R = -COOH; H; ein Alkylrest (linear oder verzweigtkettig, gesättigt oder ungesättigt, cyclisch oder acyclisch); ein Arylrest (substituiert oder unsubstituiert); und wobei einer oder mehrere dieser Alkyl- oder Arylkohlenstoffatome oder Wasserstoffatome wahlweise ersetzt sein können durch Sauerstoff-, Stickstoff-, Phosphor- oder Schwefelatome.

3. Düngemittel mit gesteuerter Freigabe nach Anspruch 1 oder 2, wobei die Carbonsäuren polymere Polycarbonsäuren umfassen.

4. Düngemittel mit gesteuerter Freigabe gemäß Anspruch 1, wobei der Magnesit-Zement ausgehärtet ist aus einer Zusammensetzung, umfassend eine oder mehrere organische Carbonsäuren.

5. Düngemittel mit gesteuerter Freigabe gemäß Anspruch 1, wobei der Zement ausgehärtet ist aus einer Zusammensetzung, umfassend ein oder mehrere organische Carbonsäureanhydride oder organische Carbonsäuresalze.

6. Düngemittel mit gesteuerter Freigabe gemäß Anspruch 3, wobei die polymeren Polycarbonsäuren *in situ* polymerisiert werden aus einer oder mehreren polymerisierbaren organischen Carbonsäuren oder Säureanhydriden davon oder Carbonsäuresalzen davon mit einem Polymerisationsinitiator.

7. Düngemittel mit gesteuerter Freigabe gemäß Anspruch 1, wobei die wasserlöslichen Düngemittel ausgewählt sind aus der Gruppe bestehend aus Harnstoff, Ammoniumnitrat, Kaliumnitrat, Ammoniumsulfat, Kaliumsulfat, Kaliumchlorid, Monoammoniumphosphat (MAP) und Diammoniumphosphat (DAP).

8. Düngemittel mit gesteuerter Freigabe gemäß Anspruch 7, in denen die Gemische des wasserlöslichen Düngemittels, die in Salzlösungen wechselwirkten, ausgewählt sind aus Harnstoff und Kaliumsulfat, Harnstoff und Kaliumchlorid, Harnstoff und Kaliumnitrat.

9. Düngemittel mit gesteuerter Freigabe gemäß Anspruch 1, wobei der Magnesit-Zement hergestellt wird aus Salzlösungen von MgCl₂ oder MgSO₄ oder Gemischen davon.

10. Ein Verfahren zur Herstellung eines Düngemittels mit gesteuerter Freigabe, wie in Anspruch 1 beansprucht, wobei die Kristalle des wasserlöslichen Düngemittels umhüllt oder mikro-umhüllt sind mit dem Magnesit-Zement.

11. Verfahren gemäß Anspruch 10, wobei die umhüllten/mikro-umhüllten wasserlöslichen Düngemittel weiter agglomeriert sind.

12. Verfahren nach Anspruch 11, wobei die Agglomerate weiter beschichtet werden mit den verbesserten Magnesit-Zementen.

13. Verfahren zur Herstellung von Düngemitteln mit gesteuerter Freigabe, wie in Anspruch 1 beansprucht, wobei die wasserlöslichen Düngemittel gemischt werden mit dem Magnesit-Zement, um ein Gemisch des Düngemittels und des Zements zu bilden.

14. Verfahren nach Anspruch 13, wobei das Gemisch gegossen wird.

15. Verfahren nach Anspruch 13, wobei das Gemisch gepreßt wird.

16. Verfahren nach Anspruch 13, wobei das Gemisch extrudiert wird.

17. Verfahren nach Anspruch 13, wobei das Gemisch pelletisiert wird.

18. Verfahren nach Anspruch 13, wobei das Düngemittel mit gesteuerter Freigabe auf die gewünschte Größenverteilung weiter zerkleinert und gesiebt wird.

19. Verfahren nach Anspruch 10, wobei das Düngemittel beschichtet wird durch eine oder mehrere Schichten des Magnesit-Zements.

20. Verfahren nach Anspruch 10, wobei der Zement separat ausgehärtet wird und anschließend appliziert durch Mischen oder Beschichten oder Umhüllen oder Mikro-Umhüllen des Düngemittels.

21. Verfahren nach Anspruch 20, wobei der Magnesit-Zement appliziert wird auf vorbeschichtete Düngemittel.

22. Verfahren nach Anspruch 10, wobei das Düngemittel mit gesteuerter Freigabe hergestellt wird durch Aushärten des Magnesit-Zements *in situ* auf der Oberfläche der wasserlöslichen Düngemittel oder auf vorbeschichteten wasserlöslichen Düngemitteln.

## Revendications

1. Engrais à libération lente comprenant un mélange de:
(a) un ou plusieurs engrais hydrosolubles; et
(b) un ciment de magnésite élaboré à partir d'une composition comprenant de l'oxychlorure de magnésium ou de l'oxysulfate de magnésium, ou des mélanges de ceux-ci, et un ou plusieurs acides carboxyliques organiques, ou des sels carboxylates de ceux-ci, ou leurs anhydrides d'acide, ou leurs mélanges.

2. Engrais à libération lente selon la revendication 1, dans lesquels le ou lesdits acides carboxyliques ont la formule:
R-(COOH)ₙ
où:
n = 1 ou plus;
R= -COOH; H; un groupe alkyle (linéaire ou ramifié; saturé ou insaturé; cyclique ou acyclique); un groupe aryle (substitué ou non-substitué); et où un ou plusieurs desdits atomes de carbone ou d'hydrogène des groupes alkyle ou aryle peuvent en option être remplacés par des atomes d'oxygène, d'azote, de phosphore ou de soufre.

3. Engrais à libération lente selon la revendication 1 ou 2, dans lesquels lesdits acides carboxyliques comprennent des acides polycarboxyliques polymères.

4. Engrais à libération lente selon la revendication 1, dans lesquels ledit ciment de magnésite est élaboré à partir d'une composition comprenant un ou plusieurs acides carboxyliques organiques.

5. Engrais à libération lente selon la revendication 1, dans lesquels ledit ciment est élaboré à partir d'une composition comprenant un ou plusieurs anhydrides d'acides carboxyliques organiques ou sels d'acides carboxyliques organiques.

6. Engrais à libération lente selon la revendication 3, dans lesquels lesdits acides polycarboxyliques polymères sont polymérisés in situ à partir d'un ou plusieurs acides carboxyliques organiques polymérisables ou des anhydrides d'acide de ceux-ci ou des sels carboxylates de ceux-ci avec un initiateur de polymérisation.

7. Engrais à libération lente selon la revendication 1, dans lesquels lesdits engrais hydrosolubles sont choisis dans le groupe consistant en l'urée, le nitrate d'ammonium, le nitrate de potassium, le sulfate d'ammonium, le sulfate de potassium, le chlorure de potassium, le phosphate monoammonique (MAP) et le phosphate diammonique (DAP).

8. Engrais à libération lente selon la revendication 7, dans lesquels les mélanges d'engrais hydrosoluble qui interagissaient dans des solutions salines sont choisis parmi: l'urée et le sulfate de potassium, l'urée et le chlorure de potassium, l'urée et le nitrate de potassium.

9. Engrais à libération lente selon la revendication 1, dans lesquels ledit ciment de magnésite est préparé à partir de solutions salines de MgCl₂ ou MgSO₄ ou des mélanges de celles-ci.

10. Procédé pour la préparation d'un engrais à libération lente selon la revendication 1, dans lequel des cristaux d'engrais hydrosoluble sont encapsulés ou microencapsulés avec ledit ciment de magnésite.

11. Procédé selon la revendication 10, dans lequel l'engrais hydrosoluble encapsulé/microencapsulé est en outre aggloméré.

12. Procédé selon la revendication 11, dans lequel les agglomérats sont en outre revêtus avec les ciments de magnésite améliorés.

13. Procédé pour la préparation d'engrais à libération lente selon la revendication 1, dans lequel ledit ou lesdits engrais hydrosolubles sont mélangés avec ledit ciment de magnésite pour former un mélange dudit engrais et dudit ciment.

14. Procédé selon la revendication 13, dans lequel le mélange est coulé.

15. Procédé selon la revendication 13, dans lequel le mélange est compressé.

16. Procédé selon la revendication 13, dans lequel le mélange est extrudé.

17. Procédé selon la revendication 13, dans lequel le mélange est mis sous forme de pellets.

18. Procédé selon la revendication 13, dans lequel ledit engrais à libération lente est en outre broyé et tamisé pour avoir la distribution granulométrique désirée.

19. Procédé selon la revendication 10, dans lequel ledit engrais est revêtu par une ou plusieurs couches dudit ciment de magnésite.

20. Procédé selon la revendication 10, dans lequel ledit ciment est élaboré séparément et est ensuite appliqué par mélange ou enrobage ou encapsulation ou microencapsulation dudit engrais.

21. Procédé selon la revendication 20, dans lequel ledit ciment de magnésite est appliqué sur le dessus des engrais préenrobés.

22. Procédé selon la revendication 10, dans lequel ledit engrais à libération lente est préparé par durcissement dudit ciment de magnésite in situ sur la surface desdits engrais hydrosolubles ou sur ceux-ci préenrobés.
